# EUROPEAN PATENT SPECIFICATION

(11) **EP 3 871 936 B1**
(45) Date of publication and mention of the grant of the patent: **07.06.2023**
(21) Application number: 19877297.2
(22) Date of filing: 28.06.2019
(51) Int. Cl.: B60W 30/06, G01S 17/931, B60Q 9/00, G08G 1/16, B62D 15/02, B60W 50/14, B60K 35/00, G01S 13/931

(54) **SAFE DISTANCE WARNING METHOD FOR AUTOMATIC PARKING, AND VEHICLE-MOUNTED TERMINAL**
VERFAHREN ZUR SICHEREN ABSTANDSWARNUNG FÜR AUTOMATISCHES PARKEN UND FAHRZEUGMONTIERTES ENDGERÄT
PROCÉDÉ D'AVERTISSEMENT DE DISTANCE DE SÉCURITÉ POUR STATIONNEMENT AUTOMATIQUE ET TERMINAL EMBARQUÉ

(30) Priority: 25.10.2018 CN 201811253506
(43) Date of publication of application: 01.09.2021
(73) Proprietor: Guangzhou Xiaopeng Motors Technology Co., Ltd., Guangzhou, Guangdong 510000 (CN)
(72) Inventor: LAI, Jianming, Guangzhou, Guangdong 510000 (CN); XIAO, Zhiguang, Guangzhou, Guangdong 510000 (CN); CHEN, Shengjun, Guangzhou, Guangdong 510000 (CN); JIANG, Shaofeng, Guangzhou, Guangdong 510000 (CN); ZHANG, Xuefei, Guangzhou, Guangdong 510000 (CN)
(74) Representative: Ran, Handong
(86) International application number: PCT/CN2019/093432
(87) International publication number: WO 2020/082776

(56) References cited:
- EP-A2- 2 487 666
- GB-A- 2 511 173
- US-A1- 2014 203 925

## Description

### TECHNICAL FIELD

The present disclosure relates to the field of autonomous driving technologies, and more particularly, to a safe distance warning method for automatic parking, and a vehicle-mounted terminal.

### BACKGROUND

In current automatic parking solutions, a vehicle will be equipped with various sensors (for example, a radar, a camera, an inertial measurement unit, etc.). These sensors can collect environmental data around the vehicle and measure distances between the vehicle and surrounding obstacles.

However, in the current solutions, when the vehicle is parked in a parking space automatically, it is difficult for a user to grasp a situation of obstacles detected by each sensor intuitively, and thus the user lacks a sense of security. In addition, a process of automatic parking usually includes two steps: sensing, i.e., using the above various sensors to detect potential obstacles around the vehicle; and controlling, i.e., controlling movement of the vehicle to keep the vehicle away from an obstacle detected through sensing. In some cases, there may be a certain delay between sensing and controlling. For example, when an obstacle that is too close to the vehicle is detected, the vehicle does not perform an obstacle avoidance operation timely. At this time, if it is difficult for the user to intuitively grasp a detection situation of the obstacle, it is also difficult for the user to take over the vehicle timely when obstacle avoidance of the vehicle is delayed. Consequently, it is difficult to manually control the vehicle to perform the obstacle avoidance operation timely.

In order to improve a visibility degree of obstacle detection, some vehicles have a function of displaying data measured by sensors thereof. For example, a reversing radar can display data of a distance between a body of a vehicle and an obstacle in real time during reversing. However, since a large number of sensors are required to realize the automatic parking function, if the data of the distance between the body of the vehicle and the obstacle detected by each sensor is displayed to the user, it is easy to make the user feel very cumbersome, and it is difficult for the user to find the most dangerous information in a large amount of distance data.

US 2014/203925 A1 shows the features of the preamble of claims 1 and 5 and discloses a method for computer-supported processing of the vicinity of a vehicle, which includes detecting the surroundings of a vehicle and providing surroundings data by a sensor system. The surroundings data may be processed to ascertain, for prespecified sections of the surroundings of the vehicle, a specific distance to objects detected by the sensor system. A collision probability between one of the detected objects and the vehicle is ascertained depending on a predicted and/or actual vehicle movement determined using udometric data. Moreover, the surroundings of the vehicle are depicted on an output unit where, for at least one of the pre-specified sections, distance information between such at least one prespecified section of the surroundings and the detected object is output using at least one of a graphic element and an acoustic element that includes collision information about a collision probability.

### SUMMARY

An embodiment of the present disclosure discloses a safe distance warning method for automatic parking, and a vehicle-mounted terminal, which are capable of warning a user that a distance between a body of a vehicle and an obstacle is too close in a simple and intuitive visualization manner.

In a first aspect of according to an embodiment of the present disclosure, a safe distance warning method for automatic parking is disclosed. The safe distance warning method includes: in a process of controlling automatic parking of a vehicle in a parking space, determining, in response to detecting a dangerous obstacle having a distance from a body of the vehicle smaller than a preset safe distance, a real orientation of the dangerous obstacle relative to a real geographic position of the vehicle; and displaying a vehicle icon of the vehicle and a warning icon on a screen. A virtual orientation of the warning icon relative to the vehicle icon corresponds to the real orientation. The safe distance warning method further includes: displaying orientation icons around the vehicle icon on an outside of the vehicle icon; and connecting the orientation icons to form an encircling circle. A distance between a boundary of the encircling circle and a boundary of the vehicle icons indicates the preset safe distance. The safe distance warning method further includes: displaying a real-time environment image captured by a camera arranged around the body of the vehicle on the screen in real time, and superimposing the vehicle icon, the orientation icons, and the encircling circle on the real-time environment image in an augmented reality manner based on the real geographic position of the vehicle, such that the vehicle icon indicates a position of the vehicle in a real environment.

As an optional implementation, in the first aspect of according to the embodiment of the present disclosure, said displaying the vehicle icon of the vehicle and the warning icon on the screen includes: displaying the vehicle icon of the vehicle on the screen; determining an orientation icon corresponding to the real orientation from the orientation icons, wherein a virtual orientation of the orientation icon corresponding to the real orientation relative to the vehicle icon corresponds to the real orientation; and replacing the orientation icon corresponding to the real orientation with the warning icon.

As an optional implementation, in the first aspect of according to the embodiment of the present disclosure, said replacing the orientation icon corresponding to the real orientation with the warning icon includes replacing an icon color of the orientation icon corresponding to the real orientation with a preset warning color. The warning icon is an orientation icon having the preset warning color as an icon color thereof.

As an optional implementation, in the first aspect of according to the embodiment of the present disclosure, the method further includes, in the process of controlling the automatic parking of the vehicle in the parking space: identifying an obstacle from an image captured by a camera arranged around the body of the vehicle, and determining a first distance between the obstacle and the body of the vehicle based on the image; determining a second distance between the obstacle and the body of the vehicle based on a radar reflection signal received by a radar arranged around the body of the vehicle; and when the first distance or the second distance is smaller than the preset safe distance, determining the obstacle as the dangerous obstacle, and performing said determining, in response to detecting the dangerous obstacle having the distance from the body of the vehicle smaller than the preset safe distance, the real orientation of the dangerous obstacle relative to the real geographic position of the vehicle.

In a second aspect according to an embodiment of the present disclosure, a vehicle-mounted terminal is disclosed. The vehicle-mounted terminal includes: a first determination unit configured to, in a process of controlling automatic parking of a vehicle in a parking space, determine, in response to detecting a dangerous obstacle having a distance from a body of the vehicle smaller than a preset safe distance, a real orientation of the dangerous obstacle relative to a real geographic position of the vehicle; and a first display unit configured to display a vehicle icon of the vehicle and a warning icon on a screen. A virtual orientation of the warning icon relative to the vehicle icon corresponds to the real orientation. The vehicle-mounted terminal further includes: a second display unit configured to display orientation icons around the vehicle icon on an outside of the vehicle icon; and a connection unit configured to connect the orientation icons to form an encircling circle. A distance between a boundary of the encircling circle and a boundary of the vehicle icon indicates the preset safe distance. The second display unit is further configured to display a real-time environment image captured by a camera arranged around the body of the vehicle on the screen in real time, and the first display unit, the second display unit and the connecting unit are configured to superimpose the vehicle icon, the orientation icons, and the encircling circle on the real-time environment image in an augmented reality manner based on the real geographic position of the vehicle, such that the vehicle icon indicates a position of the vehicle in a real environment.

As an optional implementation, in the second aspect of according to the embodiment of the present disclosure, the first display unit includes: a first display sub-unit configured to display the vehicle icon of the vehicle on the screen; a determination sub-unit configured to determine an orientation icon corresponding to the real orientation from the orientation icons, wherein a virtual orientation of the orientation icon corresponding to the real orientation relative to the vehicle icon corresponds to the real orientation; and a replacement sub-unit configured to replace the orientation icon corresponding to the real orientation with the warning icon.

As an optional implementation, in the second aspect of according to the embodiment of the present disclosure, the replacement sub-unit replaces the orientation icon corresponding to the real orientation with the warning icon in a manner of replacing, by the replacement sub-unit, an icon color of the orientation icon corresponding to the real orientation with a preset warning color. The warning icon is an orientation icon having the preset warning color as an icon color thereof.

As an optional implementation, in the second aspect of according to the embodiment of the present disclosure, the vehicle-mounted terminal further includes: an image identification unit configured to, in the process of controlling the automatic parking of the vehicle in the parking space, identify an obstacle from an image captured by a camera arranged around the body of the vehicle, and determine a first distance between the obstacle and the body of the vehicle based on the image; a radar identification unit configured to determine a second distance between the obstacle and the body of the vehicle based on a radar reflection signal received by a radar arranged around the body of the vehicle; and a second determination unit configured to, when the first distance or the second distance is smaller than the preset safe distance, determine the obstacle as the dangerous obstacle, and trigger the first determination unit to determine, in response to detecting the dangerous obstacle having the distance from the body of the vehicle smaller than the preset safe distance, the real orientation of the dangerous obstacle relative to the real geographic position of the vehicle.

In a third aspect of according to an embodiment of the present disclosure, a mobile terminal is disclosed. The mobile terminal includes a memory storing executable program codes, and a processor coupled with the memory. The processor invokes the executable program codes stored in the memory to perform any method disclosed according to an embodiment in the first aspect of the present disclosure.

In a fourth aspect according to an embodiment of the present disclosure, a computer-readable storage medium is disclosed. The computer-readable storage medium stores a computer program. The computer program causes a computer to perform any method disclosed according to an embodiment in the first aspect of the present disclosure.

In a fifth aspect according to an embodiment OF the present disclosure, a computer program product is disclosed. The computer program product causes a computer to perform any method disclosed according to an embodiment in the first aspect of the present disclosure, when the computer program product is executed on the computer.

Compared with the related art, an embodiment of the present disclosure has the following beneficial effects.

In the process of controlling the automatic parking of the vehicle in the parking space, the real orientation of the dangerous obstacle relative to the real geographic position of the vehicle can be determined in response to detecting the dangerous obstacle having the distance from the body of the vehicle smaller than the preset safe distance. Correspondingly, the vehicle icon and the warning icon can be displayed on the screen. The virtual orientation of the warning icon relative to the vehicle icon corresponds to the real orientation. That is, the user can directly see on the screen an orientation at which a dangerous obstacle too close to the vehicle may exist. It can be seen that implementing embodiments of the present disclosure can warn the user that a distance between the body of the vehicle and the obstacle is too close in a simple and intuitive visualization manner.

### BRIEF DESCRIPTION OF DRAWINGS

In order to clearly explain technical solutions of the present disclosure, drawings used in description of embodiments are briefly described below. Obviously, the drawings as described below are merely some embodiments of the present disclosure. Based on these drawings, other drawings can be obtained by those skilled in the art without creative effort.
FIG. 1 is a flowchart illustrating a safe distance warning method for automatic parking according to an embodiment of the present disclosure;
FIG. 2 is a flowchart illustrating another safe distance warning method for automatic parking according to an embodiment of the present disclosure;
FIG. 3 is an example diagram of a graphical user interface of a vehicle-mounted terminal according to an embodiment of the present disclosure;
FIG. 4 is a schematic diagram of a structure of a vehicle-mounted terminal according to an embodiment of the present disclosure;
FIG. 5 is a schematic diagram of a structure of another vehicle-mounted terminal according to an embodiment of the present disclosure; and
FIG. 6 is a schematic diagram of a structure of another vehicle-mounted terminal according to an embodiment of the present disclosure.

### DESCRIPTION OF EMBODIMENTS

Technical solutions according to embodiments of the present disclosure will be clearly and completely described below in combination with the accompanying drawings of the embodiments of the present disclosure. Obviously, embodiments described below are only a part of the embodiments of the present disclosure, rather than all of the embodiments. On a basis of the embodiments in the present disclosure, all other embodiments obtained by those skilled in the art without creative labor shall fall within the protection scope of the present disclosure.

It should be noted that terms "includes" and "have" in the embodiments of the present disclosure and the figures and any variations thereof are intended to cover non-exclusive inclusions. For example, a process, a method, a system, a product or a device that includes a series of steps or units, instead of being limited to the listed steps or units, may optionally further include steps or units that are not listed, or optionally further include other steps or units inherent to the process, the method, the product, or the device.

An embodiment of the present disclosure discloses a safety warning method for automatic parking, and a vehicle-mounted terminal, which are capable of warning a user that a distance between a body of a vehicle and an obstacle is too close in a simple and intuitive visualization manner. Detailed description is made below.

### Embodiment 1

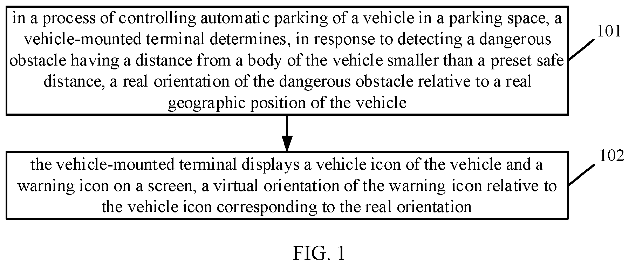

FIG. 1 is a flowchart illustrating a safety warning method for automatic parking according to an embodiment of the present disclosure. As illustrated in FIG. 1, the safety warning method for automatic parking may include the following steps.

At step 101, in a process of controlling automatic parking of a vehicle in a parking space, a vehicle-mounted terminal determines, in response to detecting a dangerous obstacle having a distance from a body of the vehicle smaller than a preset safe distance, a real orientation of the dangerous obstacle relative to a real geographic position of the vehicle.

In an embodiment of the present disclosure, the vehicle-mounted terminal may detect an environment around the vehicle through a sensor such as a millimeter wave radar, a lidar, and a camera, and may detect a distance between an obstacle and the vehicle in a sensing range of the sensor in real time. The above safe distance can be obtained based on a current vehicle speed and shortest time required to change control of the vehicle to a driver. Consequently, after the vehicle-mounted terminal issues an alarm, the driver has enough reaction time to avoid a dangerous obstacle that is too close to the vehicle. A specific value of the safe distance can be determined based on an empirical value obtained from multiple experiments, and is not limited in embodiments of the present disclosure. As an optional implementation, during an automatic parking process, both a real-time position of the vehicle and a position of an obstacle detected by the vehicle-mounted terminal can be expressed in a unified world coordinate system (for example, the WGS-84 coordinate system). When a dangerous obstacle is detected, a vehicle coordinate system with the vehicle as a center can be established. An origin of the vehicle coordinate system is a current real geographic position of the vehicle. Correspondingly, a representation of the dangerous obstacle in the world coordinate system can be converted into a representation in the vehicle coordinate system through coordinate conversion, such that a real relative orientation of the dangerous obstacle relative to the real geographic position of the vehicle may be determined.

In addition, as another optional implementation, in an embodiment of the present disclosure, in the process of controlling the automatic parking of the vehicle in the parking space, the vehicle-mounted terminal detects the dangerous obstacle of the vehicle in the following manner.

The vehicle-mounted terminal identifies an obstacle from an image captured by a camera arranged around the body of the vehicle, and determines a first distance between the obstacle and the body of the vehicle based on the image.

The vehicle-mounted terminal determines a second distance between the obstacle and the body of the vehicle based on a radar reflection signal received by a radar arranged around the body of the vehicle.

When the first distance or the second distance between the obstacle and the body of the vehicle is smaller than the preset safe distance, the obstacle is determined as the dangerous obstacle, and the method proceeds to step 101.

In the above implementations, both the camera and the radar are arranged around the body of the vehicle, and thus sensing ranges of the camera and the radar may overlap. That is, the same obstacle can be sensed by both the camera and the radar. At this time, a distance between the obstacle and the body of the vehicle detected through an image collected by the camera is determined as the first distance, and a distance between the obstacle and the body of the vehicle detected by the radar is determined as the second distance. Due to influence of factors such as detection accuracy and a mounting position of the sensor, the first distance and the second distance may be the same or different. In order to improve safety, in the above implementations, as long as any one of the first distance and the second distance is smaller than the safe distance, the vehicle-mounted terminal determines the obstacle as the dangerous obstacle, and the method proceeds to step 101 and step 102 to issue an alarm.

At step 102, the vehicle-mounted terminal displays a vehicle icon of the vehicle and a warning icon on a screen. A virtual orientation of the warning icon relative to the vehicle icon corresponds to the above real orientation.

In an embodiment of the present disclosure, the vehicle icon is used to indicate a current real geographic position of the vehicle. Optionally, the vehicle icon may be displayed on a fixed display position on the screen. Performing the above step 101 can determine the real orientation of the dangerous obstacle relative to the vehicle. Accordingly, the display position of the warning icon for indicating the dangerous obstacle on the screen can be determined according to the real orientation and the display position of the vehicle icon on the screen, and further the warning icon can be outputted and displayed on the display position. As can be seen, the user can directly see from the screen of the vehicle-mounted terminal an orientation of the vehicle in which a dangerous obstacle that is too close to the vehicle exists, such that it can be determined timely whether manual intervention is required in the process of automatic parking. In addition, in an embodiment of the present disclosure, instead of outputting and displaying measurement data of each sensor directly, the vehicle-mounted terminal outputs and displays a distance determination result (that is, the dangerous obstacle that is too close to the vehicle) obtained by integrating the measurement data of each sensor. Therefore, the user can directly obtain current orientation information of the dangerous obstacle from the display screen without making a determination.

In addition, optionally, the vehicle-mounted terminal may output and display the warning icon by means of fixed display, flickering display, increasing/decreasing an icon area, etc., and the embodiment of the present disclosure is not limited to this.

As can be seen, with the safe distance warning method for automatic parking illustrated in FIG. 1, the warning icon can be directly output on the screen when a dangerous obstacle that is too close to the vehicle is detected, such that the user may understand a relative orientation of the dangerous obstacle relative to the vehicle through the warning icon. Such a warning method is simple and intuitive, which can not only provide a safe distance warning timely, but also improve user experience since an amount of information that the user needs to process is reduced.

### Embodiment 2

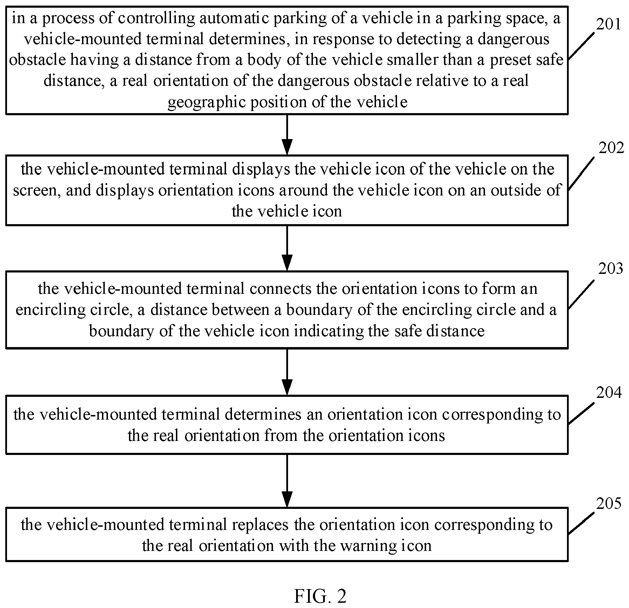

FIG. 2 is a flowchart illustrating another safe distance warning method for automatic parking according to an embodiment of the present disclosure. As illustrated in FIG. 2, the safe distance warning method for automatic parking may include the following steps.

At step 201, in a process of controlling automatic parking of a vehicle in a parking space, a vehicle-mounted terminal determines, in response to detecting a dangerous obstacle having a distance from a body of the vehicle smaller than a preset safe distance, a real orientation of the dangerous obstacle relative to a real geographic position of the vehicle.

At step 202, the vehicle-mounted terminal displays the vehicle icon of the vehicle on the screen, and displays orientation icons around the vehicle icon on an outside of the vehicle icon.

In an embodiment of the present disclosure, each orientation icon can be specifically used to indicate an orientation that a sensor may cover. A number of displayed orientation icons can be determined based on coverage range of sensors, or directly determined based on a set number of the sensors. For example, if sensors are arranged around the body of the vehicle to achieve full coverage of the body of the vehicle, at least one orientation icon can be set in each of the four directions, i.e., the front, the rear, the left, and the right of the vehicle icon. For another example, assuming that twelve ultrasonic radars are mounted around the body of the vehicle, twelve orientation icons can be set accordingly. A display position of each orientation icon can correspond to a mounting position of an ultrasonic radar and an intersection point between a detection direction of the ultrasonic radar and an extended outline of the vehicle. Furthermore, a distribution density of the orientation icons can be adjusted based on different probabilities of collision accidents occurring in different parts of the body of the vehicle. For example, during parking, since probabilities of collisions occurring in the head and the rear of the vehicle are higher than probabilities of collisions occurring at the doors on both sides of the vehicle, a number of orientation icons displayed in the front and the rear directions of the vehicle icon can be greater than a number of orientation icons displayed in the left and the right directions of the vehicle icon.

At step 203, the vehicle-mounted terminal connects the orientation icons to form an encircling circle. A distance between a boundary of the encircling circle and a boundary of the vehicle icon indicates the preset safe distance.

In an embodiment of the present disclosure, displaying the encircling circle on the screen can intuitively display to the user a safe region around the vehicle formed based on the safe distance. According to the invention, the vehicle-mounted terminal may output and display the vehicle icon, the orientation icon, and the encircling circle on the screen in an Augmented Reality (AR) manner. Specifically, the screen of the vehicle-mounted terminal displays a real-time environment image captured by a camera arranged around the body of the vehicle in real time. The vehicle-mounted terminal superimposes the vehicle icon, the orientation icons, and the encircling circle on the real-time environment image based on the real geographic position of the vehicle, such that the vehicle icon may indicate a position of the vehicle in a real environment. In this way, the user can observe whether there is an obstacle falling into the encircling circle in the real-time environment image. When an obstacle falling into the encircling circle is found, the user can timely decide whether to change control of the vehicle for controlling the vehicle manually. By implementing the above implementations, when the vehicle-mounted terminal does not detect a dangerous obstacle timely through the measurement data of the sensors, the user may intuitively and conveniently observe an obstacle that is too close to the vehicle through the encircling circle and the real-time environment image displayed on the screen. Therefore, a corresponding driving decision can be made timely.

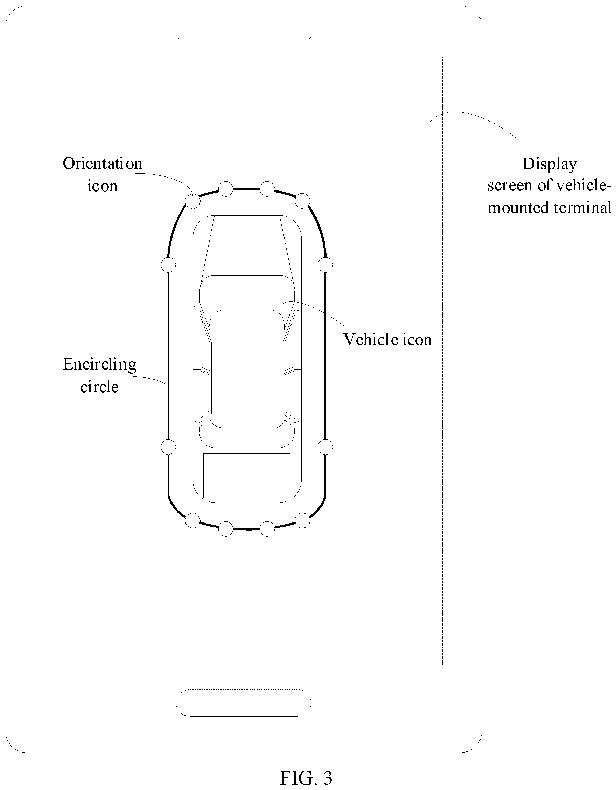

FIG. 3 is an example diagram of a graphical user interface of a vehicle-mounted terminal according to an embodiment of the present disclosure. Referring to FIG. 3, in the graphical user interface, a specific display form of a vehicle icon, orientation icons and an encircling circle is illustrated. As illustrated in FIG. 3, the orientation icons may be circular icons.

At step 204, the vehicle-mounted terminal determines an orientation icon corresponding to the real orientation from the orientation icons.

In an embodiment of the present disclosure, a virtual orientation of the orientation icon corresponding to the real orientation relative to the vehicle icon corresponds to the real orientation. Specifically, the orientation icon corresponding to the real orientation may be determined based on a mounting position of a sensor that detects a dangerous obstacle. For example, if a dangerous obstacle is detected through an image captured by a camera mounted in a head of a vehicle, the orientation icon corresponding to the real orientation is an orientation icon whose a display position is at the head of the vehicle icon. Further, a more accurate real orientation can be determined by cross-validation of coverage ranges of a number of sensors. When there are more orientation icons displayed in one of the four directions of the front, the rear, the left, and the right of the vehicle, a more accurate orientation icon corresponding to the real orientation can be determined from the orientation icons. For example, if an image captured by a camera on a side of the front of the vehicle includes a dangerous obstacle, while a camera or a radar on another side of the head of the vehicle also detects the dangerous obstacle, the dangerous obstacle is likely to be at a middle position that is in front of the head of the vehicle and close to both sides of the head of the vehicle. Correspondingly, the orientation icon corresponding to the real orientation is an orientation icon whose a display position is located in the middle position in front of the vehicle icon.

At step 205, the vehicle-mounted terminal replaces the orientation icon corresponding to the real orientation with a warning icon.

In an embodiment of the present disclosure, the vehicle-mounted terminal may specifically replace an icon color of the orientation icon corresponding to the real orientation with a preset warning color. The warning icon is an orientation icon having the preset warning color as an icon color thereof. Specifically, the present warning color can be red, which conforms to general warning color rules. The user with low academic qualifications can quickly understand that the orientation icon whose icon color is changed to the warning color is a warning signal. In other possible implementations, the orientation icon can be replaced with another graphic icon such as "an exclamation mark".

By setting the orientation icons and replacing a corresponding orientation icon with the warning icon when the dangerous obstacle is detected, the user can quickly understand a specific orientation of the dangerous obstacle. In addition, due to a mutual reference relationship between different orientation icons, it is easy for the user to position the dangerous obstacle.

As can be seen, according to the method illustrated in FIG. 2, preset orientation icons can be used to show the user orientations that sensors may cover, and further, the distribution density of the orientation icons may be adjusted based on the probability of collision accidents occurring in different parts of the body of the vehicle. In addition, when the real orientation of the dangerous obstacle relative to the vehicle is determined, the orientation icon corresponding to the real orientation can be replaced with the warning icon, such that the user can quickly understand a specific orientation of the dangerous obstacle. Further, by displaying the encircling circle formed by connecting a plurality of orientation icons, the safe region around the vehicle formed based on the safe distance may be displayed to the user intuitively. In an AR-based display solution, when the vehicle-mounted terminal does not detect the dangerous obstacle through the measurement data of the sensors timely, the user may intuitively and conveniently observe an obstacle that is too close to the vehicle in combination with the encircling circle and the real-time environment image. Therefore, a corresponding driving decision can be made timely.

### Embodiment 3

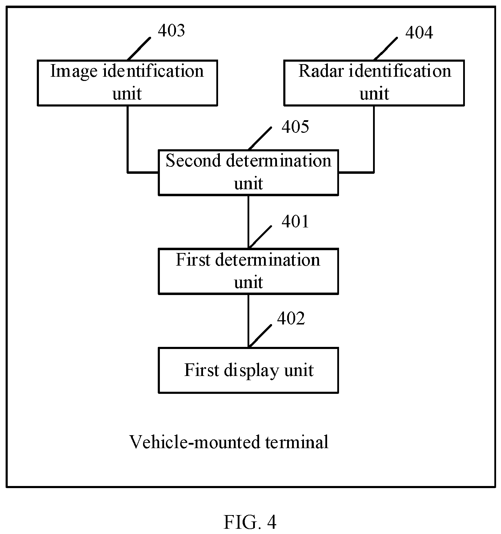

FIG. 4 is a schematic diagram of a structure of a vehicle-mounted terminal according to an embodiment of the present disclosure. As illustrated in FIG. 4, the vehicle-mounted terminal may include a first determination unit 401 and a first display unit 402.

The first determination unit 401 is configured to, in a process of controlling automatic parking of a vehicle in a parking space, determine, in response to detecting a dangerous obstacle having a distance from a body of the vehicle smaller than a preset safe distance, a real orientation of the dangerous obstacle relative to a real geographic position of the vehicle.

The first display unit 402 is configured to display a vehicle icon of the vehicle and a warning icon on a screen. A virtual orientation of the warning icon relative to the vehicle icon corresponds to the real orientation determined by the first determination unit 401. In addition, the first display unit 402 may output and display the warning icon by means of fixed display, flickering display, increasing/decreasing an icon area, etc., and the embodiment of the present disclosure is not limited to this.

Optionally, the vehicle-mounted terminal illustrated in FIG. 4 may further include an image identification unit 403, a radar identification unit 404, and a second determination unit 405.

The image identification unit 403 is configured to, in the process of controlling the automatic parking of the vehicle in the parking space, identify an obstacle from an image captured by a camera arranged around the body of the vehicle, and determine a first distance between the obstacle and the body of the vehicle based on the image.

The radar identification unit 404 is configured to determine, in the process of controlling the automatic parking of the vehicle in the parking space, a second distance between the obstacle and the body of the vehicle based on a radar reflection signal received by a radar arranged around the body of the vehicle.

The second determination unit 405 is configured to, when the first distance or the second distance is smaller than the preset safe distance, determine the obstacle as the dangerous obstacle, and trigger the first determination unit 401 to determine, in response to detecting the dangerous obstacle having the distance from the body of the vehicle smaller than the preset safe distance, the real orientation of the dangerous obstacle relative to the real geographic position of the vehicle.

In an embodiment of the present disclosure, the image identification unit 403, the radar identification unit 404, and the second determination unit 405 may be triggered to perform the above operations. An obstacle may be determined as a dangerous obstacle when any one of the first distance and the second distance is smaller than the safe distance. Consequently, safety can be improved by information complementary of the camera and the radar.

As can be seen, with the vehicle-mounted terminal illustrated in FIG. 4, the warning icon can be directly outputted on the screen when a dangerous obstacle that is too close to the vehicle is detected, such that the user may understand a relative orientation of the dangerous obstacle relative to the vehicle through the warning icon. Such a warning method is simple and intuitive, which can not only provide a safe distance warning timely, but also improve user experience since an amount of information that the user needs to process is reduced.

### Embodiment 4

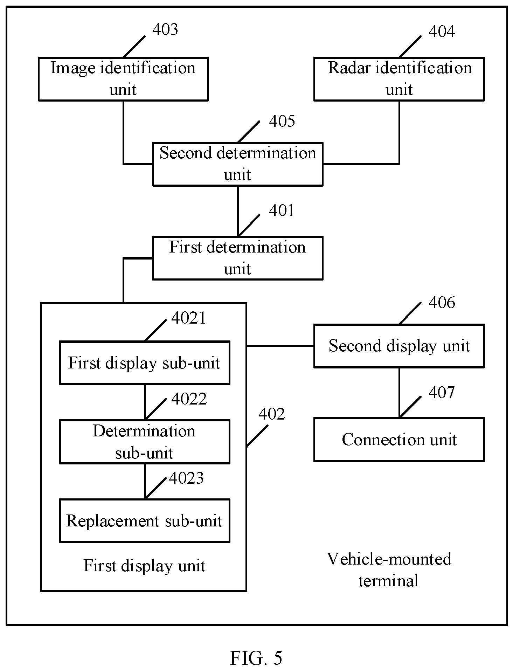

FIG. 5 is a schematic diagram of a structure of another vehicle-mounted terminal according to an embodiment of the present disclosure. The vehicle-mounted terminal illustrated in FIG. 5 is optimized by the vehicle-mounted terminal illustrated in FIG. 4. As illustrated in FIG. 5, the vehicle-mounted terminal may further include a second display unit 406.

The second display unit 406 configured to display orientation icons around the vehicle icon on an outside of the vehicle icon. Each orientation icon can be specifically used to indicate an orientation that a sensor can cover. A number of orientation icons displayed can be determined based on coverage ranges of sensors, or directly determined based on a set number of the sensors. Furthermore, a distribution density of the orientation icons can be adjusted based on different probabilities of collision accidents occurring in different parts of the body of the vehicle.

Accordingly, the first display unit 402 may specifically include a first display sub-unit 4021, a determination sub-unit 4022, and a replacement sub-unit 4023.

The first display sub-unit 4021 is configured to display the vehicle icon of the vehicle on the screen.

The determination sub-unit 4022 is configured to determine an orientation icon corresponding to the real orientation from the orientation icons displayed by the second display unit 406. A virtual orientation of the orientation icon corresponding to the real orientation relative to the vehicle icon corresponds to the real orientation.

The replacement sub-unit 4023 is configured to replace the orientation icon corresponding to the real orientation determined by the determination sub-unit 4022 with the warning icon. As an optional implementation, the replacement sub-unit 4023 replaces the orientation icon corresponding to the real orientation with the warning icon in a manner of replacing, by the replacement sub-unit 4023, an icon color of the orientation icon corresponding to the real orientation with a preset warning color. The warning icon is an orientation icon having the preset warning color as an icon color thereof.

In addition, the vehicle-mounted terminal illustrated in FIG. 5 may further include a connection unit 407.

The connection unit 407 is configured to connect the orientation icons displayed by the second display unit 406 to form an encircling circle. A distance between a boundary of the encircling circle and a boundary of the vehicle icon indicates the preset safe distance.

As an optional implementation, in an embodiment of the present disclosure, the vehicle-mounted terminal can output and display a real-time environment image captured by a camera arranged around the body of the vehicle on the screen in real time through any display unit. The first display unit 402, the display unit 406, and the connection unit 407 may superimpose the vehicle icon, the orientation icons, and the encircling circle on the real-time environment image in the AR manner, such that the vehicle icon may indicate a position of the vehicle in a real environment. Specific display positions of the orientation icons and the encircling circle may be determined based on the display position of the vehicle icon. By implementing the above implementations, when the vehicle-mounted terminal does not detect a dangerous obstacle timely through the measurement data of the sensors, the user can intuitively and conveniently observe an obstacle that is too close to the vehicle through the encircling circle and the real-time environment image displayed on the screen. Therefore, a corresponding driving decision can be made timely.

As can be seen, by implementing the method illustrated in FIG. 5, preset orientation icons can be used to show the user orientations that sensors may cover, and further, the distribution density of the orientation icons can be adjusted based on the probability of collision accidents occurring in different parts of the body of the vehicle. In addition, when the real orientation of the dangerous obstacle relative to the vehicle is determined, the orientation icon corresponding to the real orientation can be replaced with the warning icon, such that the user can quickly understand a specific orientation of the dangerous obstacle. Further, by displaying the encircling circle formed by connecting a plurality of orientation icons, the safe region around the vehicle formed based on the safe distance may be displayed to the user intuitively. In addition, in an AR-based display solution, the user can intuitively and conveniently observe an obstacle that is too close to the vehicle in combination with the encircling circle and the real-time environment image. Therefore, a corresponding driving decision can be made timely.

### Embodiment 5

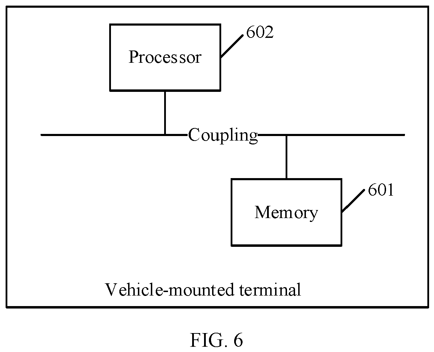

FIG. 6 is a schematic diagram of a structure of another vehicle-mounted terminal according to an embodiment of the present disclosure. As illustrated in FIG. 6, the vehicle-mounted terminal may include a memory 601 storing executable program codes, and a processor 602 coupled with the memory 601.

The processor 602 invokes the executable program codes stored in the memory 601 to perform the safe distance warning method for automatic parking illustrated in FIG. 1 or FIG. 2.

It is to be noted that the vehicle-mounted terminal illustrated in FIG. 7 may also include components that are not illustrated, such as a power supply, a speaker, a screen, a Wi-Fi module, and a Bluetooth module, which are not described in detail in this embodiment.

An embodiment of the present disclosure discloses a computer-readable storage medium. The computer-readable storage medium stores a computer program. The computer program causes a computer to perform the safe distance warning method for automatic parking illustrated in FIG. 1 or FIG. 2.

An embodiment of the present disclosure discloses a computer program product. The computer program product includes a non-transitory computer-readable storage medium storing a computer program. The computer program is operable to cause a computer to perform the safe distance warning method for automatic parking illustrated in FIG. 1 or FIG. 2.

It should be understood that "one embodiment" or "an embodiment" mentioned throughout the specification means that a specific feature, structure, or characteristic related to the embodiment is included in at least one embodiment of the present disclosure. Therefore, appearances of "in one embodiment" or "in an embodiment" in various places throughout the specification do not necessarily refer to the same embodiment.

Those skilled in the art should also know that embodiments described in the specification are optional embodiments, and actions and modules involved in the embodiments are not necessarily required by the present disclosure.

In various embodiments of the present disclosure, it should be understood that numerical values of sequence numbers of the above processes do not mean a necessary execution sequence. The execution sequence of each process should be determined by a function and an internal logic of each process, and should not constitute any limitation over implementation processes of the embodiments of the present disclosure.

The above units described as separate parts may or may not be physically separated. Parts displayed as units may or may not be physical units, i.e., the parts may be located in one place, or may be distributed on a plurality of network units. Some or all of the units can be selected according to actual requirements to achieve purposes of solutions of the embodiments.

In addition, individual functional units in the embodiments of the present disclosure may be integrated in one processing unit or may be separately physically present, or two or more units may be integrated in one unit. The integrated units as described above may be achieved in a form of hardware, or may be achieved in a form of functional software units.

If the integrated units described above are realized in the form of the functional software units and are sold or used as separate products, they can be stored in a memory available to a computer. Based on this understanding, an essential part of the technical solutions, or a part that contributes to the related art, or all or part of the technical solutions of the present disclosure can be embodied in a form of a software product, which is stored in a memory, and includes several requests used for causing a computer device (for example, a personal computer, a server or a network device, etc., and specifically, a processor in a computer device) to execute all or part of steps in the methods described in respective embodiments of the present disclosure.

Those skilled in the art can understand that all or part of the steps in the methods described in respective embodiments can be completed by instructing relevant hardware through a program. The program can be stored in a computer-readable storage medium. The storage medium includes a Read-Only Memory (ROM), a Random Access Memory (RAM), a Programmable Read-only Memory (PROM), an Erasable Programmable Read Only Memory (EPROM), a One-time Programmable Read-Only Memory (OTPROM), an Electrically-Erasable Programmable Read-Only Memory (EEPROM), a Compact Disc Read-Only Memory (CD-ROM) or other CD storages, a magnetic disk storage, a tape storage, or any other computer-readable medium that can be used to carry or store data.

The safe distance warning method for automatic parking and the vehicle-mounted terminal according to embodiments of the present disclosure have been described in detail above. Specific examples are used herein to illustrate principles and implementations of the present disclosure. The above description of the embodiments is only used to facilitate understanding of the method of the present disclosure and the core idea of the method. In addition, for those skilled in the art, changes in specific implementations and an application scope can be made according to the concept of the present disclosure. In summary, the content of the specification should not be construed as a limitation to the present disclosure.

## Claims

1. A safe distance warning method for automatic parking, comprising:
in a process of controlling automatic parking of a vehicle in a parking space, determining, in response to detecting a dangerous obstacle having a distance from a body of the vehicle smaller than a preset safe distance, a real orientation of the dangerous obstacle relative to a real geographic position of the vehicle (201);
displaying (202) a vehicle icon of the vehicle and a warning icon on a screen, wherein a virtual orientation of the warning icon relative to the vehicle icon corresponds to the real orientation;
displaying (202) orientation icons around the vehicle icon on an outside of the vehicle icon;
**characterized by** the steps of:
connecting (203) the orientation icons to form an encircling circle, wherein a distance between a boundary of the encircling circle and a boundary of the vehicle icons indicates the preset safe distance,
displaying a real-time environment image captured by a camera arranged around the body of the vehicle on the screen in real time, and
superimposing the vehicle icon, the orientation icons, and the encircling circle on the real-time environment image in an augmented reality manner based on the real geographic position of the vehicle, such that the vehicle icon indicates a position of the vehicle in a real environment.

2. The safe distance warning method according to claim 1, wherein
said displaying the vehicle icon of the vehicle and the warning icon on the screen comprises:
displaying the vehicle icon of the vehicle on the screen;
determining an orientation icon corresponding to the real orientation from the orientation icons, wherein a virtual orientation of the orientation icon corresponding to the real orientation relative to the vehicle icon corresponds to the real orientation; and
replacing the orientation icon corresponding to the real orientation with the warning icon.

3. The safe distance warning method according to claim 2, wherein said replacing the orientation icon corresponding to the real orientation with the warning icon comprises:
replacing an icon color of the orientation icon corresponding to the real orientation with a preset warning color, wherein the warning icon is an orientation icon having the preset warning color as an icon color thereof.

4. The safe distance warning method according to any one of claims 1 to 3, further comprising, in the process of controlling the automatic parking of the vehicle in the parking space:
identifying an obstacle from an image captured by a camera arranged around the body of the vehicle, and determining a first distance between the obstacle and the body of the vehicle based on the image;
determining a second distance between the obstacle and the body of the vehicle based on a radar reflection signal received by a radar arranged around the body of the vehicle; and
when the first distance or the second distance is smaller than the preset safe distance, determining the obstacle as the dangerous obstacle, and performing said determining, in response to detecting the dangerous obstacle having the distance from the body of the vehicle smaller than the preset safe distance, the real orientation of the dangerous obstacle relative to the real geographic position of the vehicle.

5. A vehicle-mounted terminal, comprising:
a first determination unit (401) configured to, in a process of controlling automatic parking of a vehicle in a parking space, determine, in response to detecting a dangerous obstacle having a distance from a body of the vehicle smaller than a preset safe distance, a real orientation of the dangerous obstacle relative to a real geographic position of the vehicle;
a first display unit (402) configured to display a vehicle icon of the vehicle and a warning icon on a screen, wherein a virtual orientation of the warning icon relative to the vehicle icon corresponds to the real orientation;
a second display unit (406) configured to display orientation icons around the vehicle icon on an outside of the vehicle icon; **characterized in that**
a connection unit (407) is configured to connect the orientation icons to form an encircling circle, wherein a distance between a boundary of the encircling circle and a boundary of the vehicle icon indicates the preset safe distance,
**in that** the second display unit (406) is further configured to display a real-time environment image captured by a camera arranged around the body of the vehicle on the screen in real time, and
**in that** the first display unit (402), the second display unit (406) and the connecting unit (407) are configured to superimpose the vehicle icon, the orientation icons, and the encircling circle on the real-time environment image in an augmented reality manner based on the real geographic position of the vehicle, such that the vehicle icon indicates a position of the vehicle in a real environment.

6. The vehicle-mounted terminal according to claim 5, wherein
the first display unit (402) comprises:
a first display sub-unit (4021) configured to display the vehicle icon of the vehicle on the screen;
a determination sub-unit (4022) configured to determine an orientation icon corresponding to the real orientation from the orientation icons, wherein a virtual orientation of the orientation icon corresponding to the real orientation relative to the vehicle icon corresponds to the real orientation; and
a replacement sub-unit (4023) configured to replace the orientation icon corresponding to the real orientation with the warning icon.

7. The vehicle-mounted terminal according to claim 6, wherein the replacement sub-unit (4023) replaces the orientation icon corresponding to the real orientation with the warning icon by:
replacing, by the replacement sub-unit (4023), an icon color of the orientation icon corresponding to the real orientation with a preset warning color, wherein the warning icon is an orientation icon having the preset warning color as an icon color thereof.

8. The vehicle-mounted terminal according to any one of claims 5 to 7, further comprising:
an image identification unit (403) configured to, in the process of controlling the automatic parking of the vehicle in the parking space, identify an obstacle from an image captured by a camera arranged around the body of the vehicle, and determine a first distance between the obstacle and the body of the vehicle based on the image;
a radar identification unit (404) configured to determine a second distance between the obstacle and the body of the vehicle based on a radar reflection signal received by a radar arranged around the body of the vehicle; and
a second determination unit (405) configured to, when the first distance or the second distance is smaller than the preset safe distance, determine the obstacle as the dangerous obstacle, and trigger the first determination unit to determine, in response to detecting the dangerous obstacle having the distance from the body of the vehicle smaller than the preset safe distance, the real orientation of the dangerous obstacle relative to the real geographic position of the vehicle.

## Patentansprüche

1. Sicherheitsabstandswarnverfahren für automatisches Einparken, das Folgendes beinhaltet:
Bestimmen, in einem Prozess des Steuerns des automatischen Einparkens eines Fahrzeugs in eine Parklücke, als Reaktion auf die Erkennung eines gefährlichen Hindernisses, dessen Abstand von einer Karosserie des Fahrzeugs kleiner ist als ein voreingestellter Sicherheitsabstand, einer realen Orientierung des gefährlichen Hindernisses relativ zu einer realen geographischen Position des Fahrzeugs (201);
Anzeigen (202) eines Fahrzeugsymbols des Fahrzeugs und eines Warnsymbols auf einem Bildschirm, wobei eine virtuelle Orientierung des Warnsymbols relativ zu dem Fahrzeugsymbol der realen Orientierung entspricht;
Anzeigen (202) von Orientierungssymbolen um das Fahrzeugsymbol herum an einer Außenseite des Fahrzeugsymbols;
**gekennzeichnet durch** die folgenden Schritte:
Verbinden (203) der Orientierungssymbole, um einen Umkreis zu bilden, wobei ein Abstand zwischen einer Grenze des Umkreises und einer Grenze der Fahrzeugsymbole den voreingestellten Sicherheitsabstand anzeigt,
Anzeigen eines von einer um die Karosserie des Fahrzeugs herum angeordneten Kamera aufgenommenen Echtzeit-Umgebungsbildes auf dem Bildschirm in Echtzeit, und
Überlagern des Fahrzeugsymbols, der Orientierungssymbole und des Umkreises auf dem Echtzeit-Umgebungsbild in Form von erweiterter Realität auf der Basis der realen geographischen Position des Fahrzeugs, so dass das Fahrzeugsymbol eine Position des Fahrzeugs in einer realen Umgebung anzeigt.

2. Sicherheitsabstandswarnverfahren nach Anspruch 1, wobei
das genannte Anzeigen des Fahrzeugsymbols des Fahrzeugs und des Warnsymbols auf dem Bildschirm Folgendes beinhaltet:
Anzeigen des Fahrzeugsymbols des Fahrzeugs auf dem Bildschirm;
Bestimmen eines Orientierungssymbols entsprechend der realen Orientierung aus den Orientierungssymbolen, wobei eine virtuelle Orientierung des Orientierungssymbols entsprechend der realen Orientierung relativ zu dem Fahrzeugsymbol der realen Orientierung entspricht; und
Ersetzen des Orientierungssymbols entsprechend der realen Orientierung durch das Warnsymbol.

3. Sicherheitsabstandswarnverfahren nach Anspruch 2, wobei das genannte Ersetzen des Orientierungssymbols entsprechend der realen Orientierung durch das Warnsymbol Folgendes beinhaltet:
Ersetzen einer Symbolfarbe des Orientierungssymbols entsprechend der realen Orientierung durch eine voreingestellte Warnfarbe, wobei das Warnsymbol ein Orientierungssymbol mit der voreingestellten Warnfarbe als Symbolfarbe davon ist.

4. Sicherheitsabstandswarnverfahren nach einem der Ansprüche 1 bis 3, das ferner im Prozess des Steuerns des automatischen Einparkens des Fahrzeugs in die Parklücke Folgendes beinhaltet:
Identifizieren eines Hindernisses aus einem von einer um die Karosserie des Fahrzeugs herum angeordneten Kamera aufgenommenen Bild und Bestimmen eines ersten Abstands zwischen dem Hindernis und der Karosserie des Fahrzeugs auf der Basis des Bildes;
Bestimmen eines zweiten Abstands zwischen dem Hindernis und der Karosserie des Fahrzeugs auf der Basis eines von einem um die Karosserie des Fahrzeugs angeordneten Radar empfangenen Radarreflexionssignals; und
Bestimmen, wenn der erste Abstand oder der zweite Abstand kleiner als der voreingestellte Sicherheitsabstand ist, des Hindernisses als das gefährliche Hindernis, und Durchführen des genannten Bestimmens, als Reaktion auf die Erkennung des gefährlichen Hindernisses, dessen Abstand von der Karosserie des Fahrzeugs kleiner als der voreingestellte Sicherheitsabstand ist, der realen Orientierung des gefährlichen Hindernisses relativ zu der realen geographischen Position des Fahrzeugs.

5. Fahrzeugmontiertes Endgerät, das Folgendes umfasst:
eine erste Bestimmungseinheit (401), konfiguriert zum Bestimmen, in einem Prozess des Steuerns des automatischen Einparkens eines Fahrzeugs in eine Parklücke, als Reaktion auf die Erkennung eines gefährlichen Hindernisses, dessen Abstand von einer Karosserie des Fahrzeugs kleiner als ein voreingestellter Sicherheitsabstand ist, einer realen Orientierung des gefährlichen Hindernisses relativ zu einer realen geografischen Position des Fahrzeugs;
eine erste Anzeigeeinheit (402), die zum Anzeigen eines Fahrzeugsymbols des Fahrzeugs und eines Warnsymbol auf einem Bildschirm konfiguriert ist, wobei eine virtuelle Orientierung des Warnsymbols relativ zum Fahrzeugsymbol der realen Orientierung entspricht;
eine zweite Anzeigeeinheit (406), die zum Anzeigen von Orientierungssymbolen um das Fahrzeugsymbol herum auf einer Außenseite des Fahrzeugsymbols konfiguriert ist;
**dadurch gekennzeichnet, dass**
eine Verbindungseinheit (407) zum Verbinden der Orientierungssymbole konfiguriert ist, um einen Umkreis zu bilden, wobei ein Abstand zwischen einer Grenze des Umkreises und einer Grenze des Fahrzeugsymbols den voreingestellten Sicherheitsabstand anzeigt,
dadurch, dass die zweite Anzeigeeinheit (406) ferner zum Anzeigen eines von einer um die Karosserie des Fahrzeugs herum angeordneten Kamera aufgenommenen Echtzeit-Umgebungsbildes auf dem Bildschirm in Echtzeit konfiguriert ist, und
dadurch, dass die erste Anzeigeeinheit (402), die zweite Anzeigeeinheit (406) und die Verbindungseinheit (407) zum Überlagern des Fahrzeugsymbols, der Orientierungssymbole und des Umkreises auf dem Echtzeit-Umgebungsbild in Form von erweiterter Realität auf der Basis der realen geographischen Position des Fahrzeugs konfiguriert sind, so dass das Fahrzeugsymbol eine Position des Fahrzeugs in einer realen Umgebung anzeigt.

6. Fahrzeugmontiertes Endgerät nach Anspruch 5, wobei die erste Anzeigeeinheit (402) Folgendes umfasst:
eine erste Anzeigesubeinheit (4021), die zum Anzeigen des Fahrzeugsymbols des Fahrzeugs auf dem Bildschirm konfiguriert ist;
eine Bestimmungssubeinheit (4022), die zum Bestimmen eines Orientierungssymbols entsprechend der realen Orientierung aus den Orientierungssymbolen konfiguriert ist, wobei eine virtuelle Orientierung des Orientierungssymbols entsprechend der realen Orientierung relativ zu dem Fahrzeugsymbol der realen Orientierung entspricht; und
eine Ersetzungssubeinheit (4023), die zum Ersetzen des Orientierungssymbols entsprechend der realen Orientierung durch das Warnsymbol konfiguriert ist.

7. Fahrzeugmontiertes Endgerät nach Anspruch 6, wobei die Ersetzungssubeinheit (4023) das Orientierungssymbol entsprechend der realen Orientierung durch das Warnsymbol ersetzt durch:
Ersetzen, durch die Ersetzungssubeinheit (4023), einer Symbolfarbe des Orientierungssymbols entsprechend der realen Orientierung durch eine voreingestellte Warnfarbe, wobei das Warnsymbol ein Orientierungssymbol mit der voreingestellten Warnfarbe als Symbolfarbe davon ist.

8. Fahrzeugmontiertes Endgerät nach einem der Ansprüche 5 bis 7, das ferner Folgendes umfasst:
eine Bildidentifizierungseinheit (403), die zum Identifizieren, in dem Prozess des Steuerns des automatischen Einparkens des Fahrzeugs in die Parklücke, eines Hindernisses aus einem von einer um die Karosserie des Fahrzeugs herum angeordneten Kamera aufgenommenen Bild und zum Bestimmen eines ersten Abstands zwischen dem Hindernis und der Karosserie des Fahrzeugs auf der Basis des Bildes konfiguriert ist;
eine Radar-Identifizierungseinheit (404), die zum Bestimmen eines zweiten Abstands zwischen dem Hindernis und der Karosserie des Fahrzeugs auf der Basis eines von einem um die Karosserie des Fahrzeugs angeordneten Radar empfangenen Radarreflexionssignals konfiguriert ist; und
eine zweite Bestimmungseinheit (405), die zum Bestimmen, wenn der erste Abstand oder der zweite Abstand kleiner als der voreingestellte Sicherheitsabstand ist, des Hindernisses als das gefährliche Hindernis und zum Auslösen der ersten Bestimmungseinheit konfiguriert ist, um als Reaktion auf die Erkennung des gefährlichen Hindernisses, dessen Abstand von der Karosserie des Fahrzeugs kleiner als der voreingestellte Sicherheitsabstand ist, die reale Orientierung des gefährlichen Hindernisses relativ zu der realen geographischen Position des Fahrzeugs zu bestimmen.

## Revendications

1. Procédé d'avertissement de distance de sécurité pour stationnement automatique, comprenant :
dans un processus de commande de stationnement automatique d'un véhicule dans une place de stationnement, une détermination, en réponse à une détection d'un obstacle dangereux qui présente une distance par rapport à un corps du véhicule inférieure à une distance de sécurité prédéfinie, d'une orientation réelle de l'obstacle dangereux par rapport à une position géographique réelle du véhicule (201) ;
un affichage (202) d'une icône de véhicule du véhicule et d'une icône d'avertissement sur un écran, dans lequel une orientation virtuelle de l'icône d'avertissement par rapport à l'icône de véhicule correspond à l'orientation réelle ;
un affichage (202) d'icônes d'orientation autour de l'icône de véhicule sur un extérieur de l'icône de véhicule ;
**caractérisé par** les étapes :
de solidarisation (203) des icônes d'orientation pour former un cercle encerclant, dans lequel une distance entre une délimitation du cercle encerclant et une délimitation des icônes de véhicule indique la distance de sécurité prédéfinie,
d'affichage d'une image d'environnement en temps réel capturée par une caméra agencée autour du corps du véhicule sur l'écran en temps réel, et
de superposition de l'icône de véhicule, des icônes d'orientation, et du cercle encerclant sur l'image d'environnement en temps réel en réalité augmentée sur la base de la position géographique réelle du véhicule, de telle sorte que l'icône de véhicule indique une position du véhicule dans un environnement réel.

2. Procédé d'avertissement de distance de sécurité selon la revendication 1, dans lequel
ledit affichage de l'icône de véhicule du véhicule et de l'icône d'avertissement sur l'écran comprend :
un affichage de l'icône de véhicule du véhicule sur l'écran ;
une détermination d'une icône d'orientation correspondant à l'orientation réelle parmi les icônes d'orientation, dans lequel une orientation virtuelle de l'icône d'orientation correspondant à l'orientation réelle par rapport à l'icône de véhicule correspond à l'orientation réelle ; et
un remplacement de l'icône d'orientation correspondant à l'orientation réelle avec l'icône d'avertissement.

3. Procédé d'avertissement de distance de sécurité selon la revendication 2, dans lequel ledit remplacement de l'icône d'orientation correspondant à l'orientation réelle avec l'icône d'avertissement comprend :
un remplacement d'une couleur d'icône de l'icône d'orientation correspondant à l'orientation réelle avec une couleur d'avertissement prédéfinie, dans lequel l'icône d'avertissement est une icône d'orientation présentant la couleur d'avertissement prédéfinie à titre de couleur d'icône de celle-ci.

4. Procédé d'avertissement de distance de sécurité selon l'une quelconque des revendications 1 à 3, comprenant en outre, dans le processus de commande du stationnement automatique du véhicule dans la place de stationnement :
une identification d'un obstacle à partir d'une image capturée par une caméra agencée autour du corps du véhicule, et une détermination d'une première distance entre l'obstacle et le corps du véhicule sur la base de l'image ;
une détermination d'une seconde distance entre l'obstacle et le corps du véhicule sur la base d'un signal radar réfléchi reçu par un radar agencé autour du corps du véhicule ; et
lorsque la première distance ou la seconde distance est inférieure à la distance de sécurité prédéfinie, une détermination de l'obstacle à titre d'obstacle dangereux, et une réalisation de ladite détermination, en réponse à une détection de l'obstacle dangereux qui présente la distance par rapport au corps du véhicule inférieure à la distance de sécurité prédéfinie, de l'orientation réelle de l'obstacle dangereux par rapport à la position géographique réelle du véhicule.

5. Terminal monté sur véhicule, comprenant :
une première unité de détermination (401) configurée pour, dans un processus de commande de stationnement automatique d'un véhicule dans une place de stationnement, déterminer, en réponse à la détection d'un obstacle dangereux qui présente une distance par rapport à un corps du véhicule inférieure à une distance de sécurité prédéfinie, une orientation réelle de l'obstacle dangereux par rapport à une position géographique réelle du véhicule ;
une première unité d'affichage (402) configurée pour afficher une icône de véhicule du véhicule et une icône d'avertissement sur un écran, dans lequel une orientation virtuelle de l'icône d'avertissement par rapport à l'icône de véhicule correspond à l'orientation réelle ;
une seconde unité d'affichage (406) configurée pour afficher des icônes d'orientation autour de l'icône de véhicule sur un extérieur de l'icône de véhicule ;
**caractérisé en ce qu'**une unité de solidarisation (407) est configurée pour solidariser les icônes d'orientation pour former un cercle encerclant, dans lequel une distance entre une délimitation du cercle encerclant et une délimitation de l'icône de véhicule indique la distance de sécurité prédéfinie,
**en ce que** la seconde unité d'affichage (406) est en outre configurée pour afficher une image d'environnement en temps réel capturée par une caméra agencée autour du corps du véhicule sur l'écran en temps réel, et
**en ce que** la première unité d'affichage (402), la seconde unité d'affichage (406) et l'unité de solidarisation (407) sont configurées pour superposer l'icône de véhicule, les icônes d'orientation, et le cercle encerclant sur l'image d'environnement en temps réel en réalité augmentée sur la base de la position géographique réelle du véhicule, de telle sorte que l'icône de véhicule indique une position du véhicule dans un environnement réel.

6. Terminal monté sur véhicule selon la revendication 5, dans lequel la première unité d'affichage (402) comprend :
une première sous-unité d'affichage (4021) configurée pour afficher l'icône de véhicule du véhicule sur l'écran ;
une sous-unité de détermination (4022) configurée pour déterminer une icône d'orientation correspondant à l'orientation réelle parmi les icônes d'orientation, dans lequel une orientation virtuelle de l'icône d'orientation correspondant à l'orientation réelle par rapport à l'icône de véhicule correspond à l'orientation réelle ; et
une sous-unité de remplacement (4023) configurée pour remplacer l'icône d'orientation correspondant à l'orientation réelle avec l'icône d'avertissement.

7. Terminal monté sur véhicule selon la revendication 6, dans lequel la sous-unité de remplacement (4023) remplace l'icône d'orientation correspondant à l'orientation réelle avec l'icône d'avertissement en :
remplaçant, par la sous-unité de remplacement (4023), une couleur d'icône de l'icône d'orientation correspondant à l'orientation réelle avec une couleur d'avertissement prédéfinie, dans lequel l'icône d'avertissement est une icône d'orientation présentant la couleur d'avertissement prédéfinie à titre de couleur d'icône de celle-ci.

8. Terminal monté sur véhicule selon l'une quelconque des revendications 5 à 7, comprenant en outre :
une unité d'identification d'image (403) configurée pour, dans le processus de commande du stationnement automatique du véhicule dans la place de stationnement, identifier un obstacle à partir d'une image capturée par une caméra agencée autour du corps du véhicule, et déterminer une première distance entre l'obstacle et le corps du véhicule sur la base de l'image ;
une unité d'identification radar (404) configurée pour déterminer une seconde distance entre l'obstacle et le corps du véhicule sur la base d'un signal radar réfléchi reçu par un radar agencé autour du corps du véhicule ; et
une seconde unité de détermination (405) configurée pour, lorsque la première distance ou la seconde distance est inférieure à la distance de sécurité prédéfinie, déterminer l'obstacle à titre d'obstacle dangereux, et déclencher la première unité de détermination pour déterminer, en réponse à une détection de l'obstacle dangereux qui présente la distance par rapport au corps du véhicule inférieure à la distance de sécurité prédéfinie, l'orientation réelle de l'obstacle dangereux par rapport à une position géographique réelle du véhicule.
